Europäisches Patentamt

European Patent Office

Office européen des brevets

(19)

(11) Veröffentlichungsnummer: **0 203 978**
**B1**

(12) **EUROPÄISCHE PATENTSCHRIFT**

(45) Veröffentlichungstag der Patentschrift:
29.03.89

(21) Anmeldenummer: 86900090.1

(22) Anmeldetag: 16.11.85

(86) Internationale Anmeldenummer:
PCT/EP 85/00625

(87) Internationale Veröffentlichungsnummer:
WO 86/03543 (19.06.86 Gazette 86/13)

(51) Int. Cl.⁴: **E 21 B 12/02,** F 16 C 19/52,
G 01 M 13/04, G 01 L 5/00

(54) **VERFAHREN UND VORRICHTUNG ZUR ÜBERWACHUNG VON ROLLENBOHRWERKZEUGEN.**

(30) Priorität: 08.12.84 DE 3444846

(43) Veröffentlichungstag der Anmeldung:
10.12.86 Patentblatt 86/50

(45) Bekanntmachung des Hinweises auf die Patenterteilung:
29.03.89 Patentblatt 89/13

(84) Benannte Vertragsstaaten:
FR GB

(56) Entgegenhaltungen:
DE-A-2 746 937
DE-A-2 947 937
DE-C-3 230 359
FR-A-2 125 926
FR-A-2 356 920
GB-A-2 113 845
US-A-4 118 933

Glückauf 116 (1980), Nr. 15, Seiten 767-770

(73) Patentinhaber: Bergwerksverband GmbH, Franz-Fischer- Weg 61, D-4300 Essen 13 (DE)

(72) Erfinder: BÖING, Rolf, Im Wiedenbusch 41, D-5800 Hagen (DE)
Erfinder: FRASE, Dietmar, Sonnenstrasse 77, D-8721 Dittelbrunn (DE)
Erfinder: NOESKE, Manfred, Harweg 38, D-4100 Duisburg (DE)

(74) Vertreter: Weydert, Robert, OFFICE DENNEMEYER S.à.r.l. P.O. Box 1502, L-1015 Luxembourg (LU)

## Beschreibung

Die Erfindung betrifft ein Verfahren zur Überwachung der Schneid- und Warzenrollenbohrwerkzeuge von Bohrmaschinen, insbesondere von Vortriebsmaschinen im Berg- und Tunnelbau, wobei über Meßwertaufnehmer die an den mit Wälzlagern ausgerüsteten Rollenbohrwerkzeugen auftretenden Belastungen sowie das Abrollverhalten der Rollenbohrwerkzeuge erfaßt und die Meßwerte einer Auswerteeinheit zugeleitet werden. Die Erfindung betrifft außerdem eine Vorrichtung zur Durchführung des Verfahrens mit einer Einrichtung zur Meßwertaufnahme der an den Rollenbohrwerkzeugen auftretenden Belastungen sowie deren Abrollverhalten, die einen Dehnungsmeßstreifen und eine Auswerteeinheit aufweist.

Insbesondere im untertägigen Berg- und Tunnelbau eingesetzte Teil- und Vollschnittmaschinen, die mit Rollenbohrwerkzeugen ausgerüstet sind, weisen einen Bohrkopf auf, der die gesamte Ortsbrust bei der Auffahrung bearbeitet, und das anstehende Mineral löst. Diese Lösearbeit erfolgt mit Hilfe von Schneid- oder Warzenrollen, die auf oder an der sich drehenden vorderen Scheibe des Bohrkopfes bzw. des haubenförmigen Bohrkopfes angeordnet sind. Die Schneid- oder Warzenrollen zertrümmern das Gestein durch hohen Andruck, wozu die Streckenvortriebsmaschine mit Abspannpratzen gegen die Streckenstöße verspannt werden kann oder sich entsprechend auf dem Liegenden abstützt. Zur Ermittlung der Lastverteilung über den Bohrkopfbereich dieser Vortriebsmaschinen werden die an den einzelnen Rollenbohrwerkzeugen auftretenden Belastungen mittels Dehnungsmeßstreifen gemessen. (Glückauf 116 (1980), Nr. 15, S 767-770) Diese Messungen an den Lagerböcken sind allerdings in der Aussage nicht vollwertig, weil sie keine Beurteilung des Überrollablaufs der Rollenbohrwerkzeuge erlauben. Die Oberwachung des ordnungsgemäßen Überrollablaufes der Rollenbohrwerkzeuge, welche eine Aussage über das Verschleißverhalten und über eine eventuell durch einen Rollenstillstand verursachte Funkenbildung ermöglicht, muß daher parallel über eine zweite Meßstelle vorgenommen werden. Die bekannten Rollenstillstandsüberwachungen lassen nur eine ausschließliche Beurteilung des Überrollablaufes zu. Bei den bekannten Verfahren wird über Impulserzeugung an einer Meßstelle jeweils die Drehung der Schneidrolle angezeigt. Nachteilig bei den bekannten Verfahren und auch den bekannten Vorrichtungen ist einmal, daß getrennte Meßstellen vorhanden sein müssen und dass ein Rollenstillstand unter Umständen erst zeitlich verzögert gemessen und gemeldet wird. Zudem ist die bekannte Messeinrichtung zur Überwachung des Überrollverhaltens von Rollenbohrwerkzeugen (DE-A-3 230 359) durch die Positionierung einer Vielzahl von Signalgebern nur in sehr aufwendiger Bauform möglich. Hier ist besonders zu berücksichtigen, daß die räumliche Anordnung von Signalgeber und Signalempfänger in zwei verschiedenen Bauteilen vorgenommen worden ist.

Aus der DE-A-2 947 937 ist ein Verfahren und eine Vorrichtung zur Bestimmung von Wälzlagerschäden bekannt. Es ist mindestens je ein Meßfühler dem Lageraußenring und dem Lagerinnenring zugeordnet welche elektrische Signale erzeugen, die nach Schadensort und Schadensgröße ausgewertet werden.

Schließlich ist es aus der DE-A-2 746 937 schon bekannt äußere, an einem Lager angreifende Kräfte durch Anbringung von zwei Meßstellen am Innenring oder Außenring des Lagers zu erfassen.

Der Erfindung liegt die Aufgabe zugrunde, das Verfahren und die Vorrichtung gemäß der anmeldungsgemäßen Gattung derart weiterzubilden, daß eine genaue, einfache und konzentrierte Erfassung der an den Rollenbohrwerkzeugen auftretenden Belastungen sowie deren Abrollverhalten möglich ist.

Diese Aufgabe wird erfindungsgemäß mit den in den kennzeichnenden Teilen des Verfahrens- und des Vorrichtungsanspruches angegebenen Mitteln gelöst.

Durch das erfindungsgemäße Verfahren ist es überraschend möglich, zugleich die anfallenden Belastungsgrößen als solche als auch das Abrollverhalten von Rollenbohrwerkzeugen sicher und mit einem einzigen Signal zu überwachen. Das Signal als solches gibt an, daß es nicht zu einem Stillstand des Rollenbohrwerkzeuges gekomment ist, während die absolute Größe des Signals die Größe der Belastung angibt. Die auf diese Art und Weise enmittelten Werte sind wesentlich genauer und einfacher zu übertragen als die bei den bereits bekannten Verfahren. Damit wird eine kurzfristigere und sicherere Reaktion auf den Betriebsablauf möglich. Vorrichtungsmäßig wird die Aufgabe dadurch gelöst, daß die Meßstelle in einem der Ringe des Wälzlagers angeordnet und als Dehnungsmeßstreifen ausgebildet ist. Diese Lösung ist von Vorteil, weil der Aufbau konstruktiv einfacher ist, da nur eine einzige Meßstelle eingerichtet und beobachtet werden muß. Sie ermöglicht die Überwachung aller notwendigen Funktionen und enthält die entsprechenden Informationen.

Die gezielt eingebrachte Dehnungsmeßstreifen-Meßstelle ermöglicht es, sicher und einfach während eines Schneidvorganges gleichzeitig die notwendigen genauen Informationen über die anfallenden Belastungsgrößen und die Drehbewegung bzw. den Stillstand des Rollenbohrwerkzeuges zu ermitteln. Dabei ist die Charakteristik des Meßsignals durch den Wechsel der Spannungen, entstehend bei einer Überrollung der Meßstelle durch die Wälzkörper, vorgegeben. Aus diesem schwingungsförmig anfallenden Meßsignal ist somit das Überrollverhalten des Rollenbohrwerkzeuges eindeutig ablesbar bzw. ableitbar. Besonders vorteilhaft ist, daß das Abrollverhalten des Rollenbohrwerkzeuges über eine Vielzahl von Impulsen pro Umdrehung zu bestimmen ist. Der Stillstand eines Rollenbohrwerkzeuges ist somit kurzfristig zu erkennen und damit zu beheben ist.

Als besonders vorteilhaft ist bei der vorliegenden Erfindung anzusehen, daß eine wesentliche Vereinfachung des Meßverfahrens erreicht wird, und eine konstruktiv einfache und leicht anzubringende Vorrichtung geschaffen ist, bei der mit derselben Meßstelle gleichzeitig die Belastungshöhe eines Rollenbohrwerkzeuges genau ermittelt werden kann, sowie auch dessen Rollverhalten. Ein wesentlicher Vorteil ist weiter, daß während eines Schneidvorganges eine Vielzahl von Impulsen empfangen und ausgewertet werden kann, wodurch eine hohe Informationsdichte erreicht wird.

Weitere Einzelheiten zum Anmeldungsgegenstand sind in der nachfolgenden Beschreibung der Figuren wiedergegeben. Es zeigen:

Fig. 1    die Vorkopfansicht eines Bohrkopfes einer Vollschnittvortriebsmaschine,
Fig. 2    Querschnitt durch ein Wälzlager eines Rollenbohrwerkzeuges mit Meßstelle im Außenring,
Fig. 3    Längsschnitt gemäß Fig. 2,
Fig. 4    Querschnitt eines Wälzlagerteils mit Meßstelle im Innenring,
Fig. 5    Längsschnitt gemäß Fig. 4, und
Fig. 6    graphische Darstellung eines Meßsignals beim Überrollvorgang.

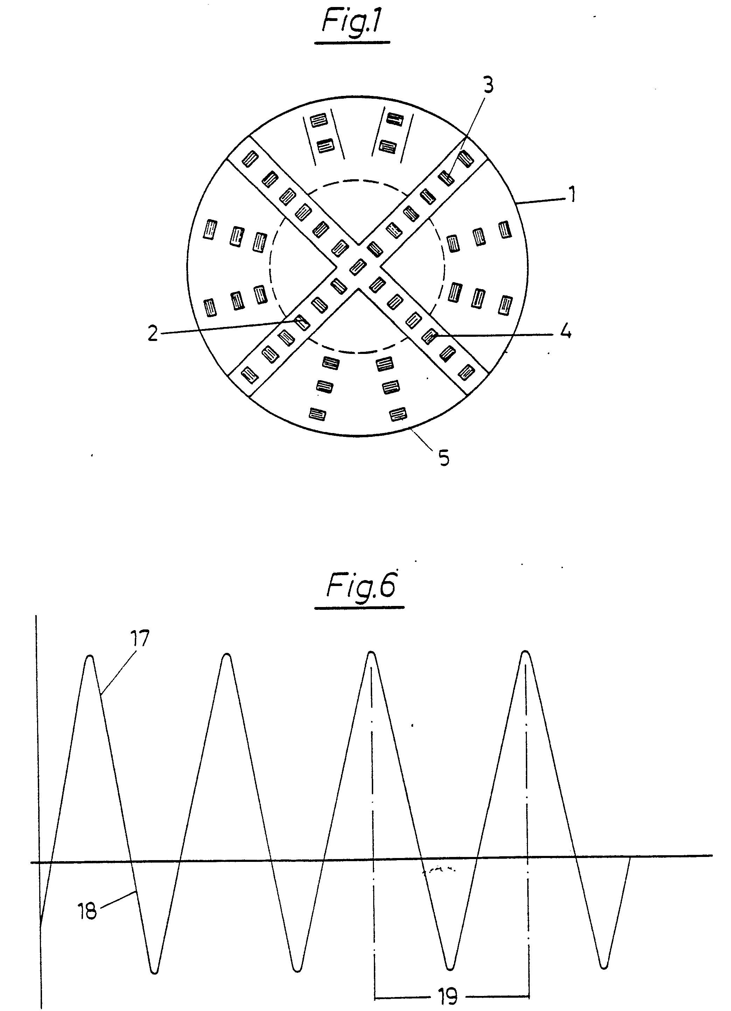

Der in Fig. 1 wiedergegebene Bohrkopf 1 ist schematisiert dargestellt und gibt in etwa die Anordnung der verschiedenen Rollen 2, 3, 4, 5 wieder, über die das Gestein durch entsprechendes Anpressen geschnitten bzw. zerkleinert wird.

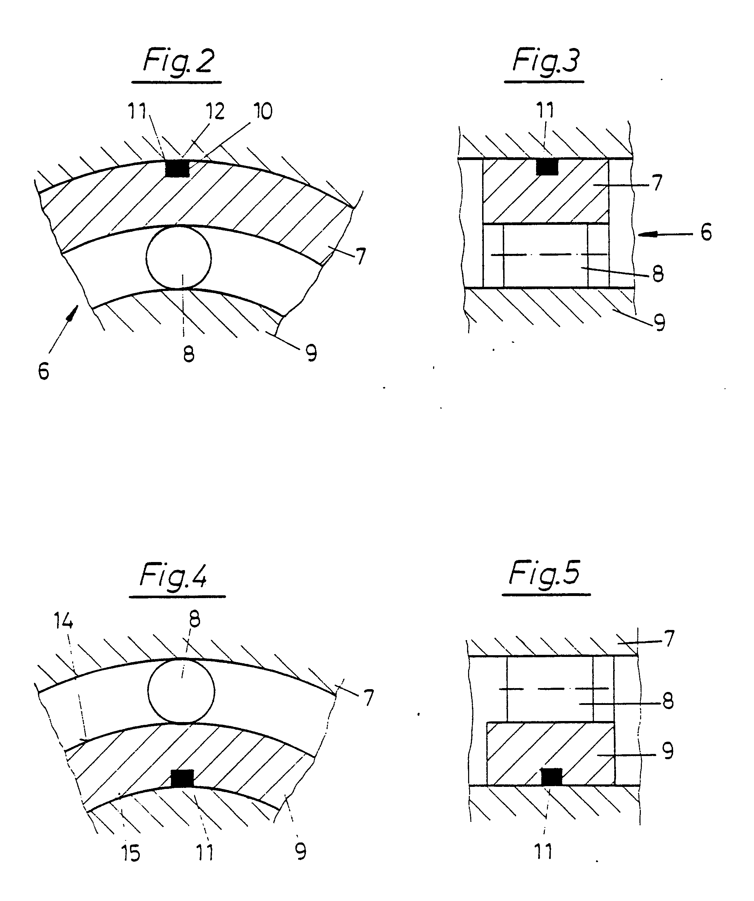

Jeder der einzelnen Rollen 2, 3, 4, 5 ist mit einem Wälzlager 6 ausgerüstet, wie sie in den Fig. 2 bis 5 im Ausschnitt zu entnehmen ist. Zwischen Außenring 7 und Innenring 9 sind eine Vielzahl von Wälzkörpern 8 angeordnet, die einen gleichmäßigen Rollvorgang der Rollen 2 bis 5 ermöglichen sollen. Dabei kann der Außenring 7 die Hülse der Schneidrolle sein bzw. der Innenring 9 die Lagerachse der Schneidrolle.

Nach den Fig. 2 und 3 ist im Außenring 7 eine Ausnehmung 10 mit der Meßstelle 11 angeordnet, wobei es sich bei der Meßstelle 11 (Meßaufnehmer) um einen Dehnungsmeßstreifen 12 handelt, der in der Ausnehmung 10 vorzugsweise verklebt angeordnet ist. Nach den Fig. 4 und 5 ist dieser Dehnungsmeßstreifen 12 bzw. ist die Meßstelle 11 in einer Ausnehmung 10 des Innenringes 9 untergebracht.

Sowohl der Ausbildung nach Fig. 2 und 3 wie auch nach Fig. 4 und 5 sind die Ausnehmungen 10 bzw. die Meßstelle 11 jeweils dem Rand 15 zugeordnet, während die Wälzkörper 8 auf den Rand 14 direkt einwirken.

Fig. 6 stellt graphisch das Meßsignal beim Überrollvorgang dar. Es zeichnet sich durch Wechsel zwischen Dehnungsbereichen 17 und Spannungsbereichen 18 aus, wobei mit 19 die Periode zwischen zwei aufeinanderfolgenden maximalen Krafteinleitungen aus einer Belastung der Meßstelle durch die Wälzkörper bezeichnet ist.

## Patentansprüche

1. Verfahren zur Überwachung der Schneid- und Warzenrollenbohrwerkzeuge von Bohrmaschinen, insbesondere von Vortriebsmaschinen im Berg- und Tunnelbau, wobei über Meßwertaufnehmer die an den mit Wälzlagern (6) ausgerüsteten Rollenbohrwerkzeugen auftretenden Belastungen sowie das Abrollverhalten der Rollenbohrwerkzeuge erfaßt und die Meßwerte einer Auswerteeinheit zugeleitet werden, dadurch gekennzeichnet, daß die Meßwerte an einer Meßstelle (11) je Rollenbohrwerkzeug abgenommen werden und dabei neben der vorschubbedingten Spannungszunahme noch der aus der Überrollung der Meßstelle (11) durch die Walzkörper (8) herrührende Spannungswechsel an einem der beiden Wälzlagerringe (7, 9) durch Messung der Tangentialspannungen miterfasst wird.

2. Vorrichtung zur Durchführung des Verfahrens nach Anspruch 1 mit einer Einrichtung zur Meßwertaufnahme der an den Rollenbohrwerkzeugen auftretenden Belastungen sowie deren Abrollverhalten, die einen Dehnungsmeßstreifen (12) und eine Auswerteeinheit aufweist, dadurch gekennzeichnet, daß nur eine Meßstelle (11) am Innen- (9) bzw. Außenring (7) eines Rollenbohrwerkzeuges vorgesehen ist, die einen Dehnungsmeßstreifen (12) aufweist, und daß der Dehnungsmeßstreifen (12) an dem den Wälzrollen (8) gegenüberliegenden Rand (15) des Außen- oder Innenringes (7, 9) angeordnet ist.

3. Vorrichtung nach Anspruch 2, dadurch gekennzeichnet, daß die Meßstelle (11) in einer der Wälzkörperbahn zugeordneten Ausnehmung (10) positioniert ist.

## Claims

1. Process for monitoring the cutting and warted wheel-type boring tools of boring machines, especially of advance working machines in mining and tunnelling, wherein transducers detect the loads that occur at the wheel-type boring tools, which are equipped with roller bearings (6), as well as the running behaviour of the wheel-type boring tools, and the measured quantities are sent to an evaluator, characterised in that the measured quantities are measured at one measurement point (11) per wheel-type boring tool and that in addition to the feed-governed increase in stress, the change in stress produced when the rolling bodies (8) roll over the measurement point (11) is also recorded at one of the two roller bearing rings (7, 9) by measurement of the tangential stresses.

2. System for carrying out the process according to claim 1, having a device for recording the measured quantities of the loads produced at the wheel-type boring tools, as well as the running behaviour thereof, incorporating a strain gauge (12) and an evaluator, characterised in that only one measurement point (11) is provided on the inner ring (9) and the outer ring (7) of a wheel-type boring tool, said measurement point including a strain gauge (12), and in that the strain gauge (12) is located on the rim (15) of the outer or inner ring (7, 9), opposite the rollers (8).

3. System according to claim 2, characterised in that the measurement point (11) is positioned in a recess (10) associated with the path of the rolling bodies.

## Revendications

1. Procédé de surveillance des outils de forage, à molettes à taillant de coupe et à boutons, de machines de forage, en particulier de machines de creusement dans l'exploitation des mines et dans le percement de tunnels, procédé permettant, au moyen d'un capteur de mesures la saisie des charges intervenant sur les molettes de forage équipées de paliers à roulement (6) ainsi que la saisie du comportement au roulement des molettes de forage et permettant la transmission des mesures à une unité d'interprétation de ces mesures, caractérisé en ce que les valeurs de mesure sont saisies sur un point de mesure (11) pour chaque outil de forage à molettes et en ce qu'à côté de l'augmentation des tensions conditionnée par l'avancement, est saisie en même temps, sur l'une des deux bagues (7, 9) du palier à roulement, par mesure des tensions tangentielles, la variation de tension provenant du roulement des éléments roulants (8) sur le point de mesure (11).

2. Dispositif pour exécuter le procédé, avec un équipement de saisie des mesures des charges intervenant sur les molettes de forage ainsi que leur comportement au roulement, équipement comportant une jauge extensométrique et une unité d'interprétation, caractérisé en ce qu'est prévu sur, la bague interne (9) ou externe (7) de l'outil de forage à molettes, seulement un point de mesure (11) qui comporte une jauge extensométrique (12) et en ce que la jauge extensométrique (12) est placée sur le bord (15) faisant face aux éléments roulants (8), des bagues (7, 9) interne et externe.

3. Dispositif suivant la revendication 2, caractérisé en ce que le point de mesure (11) est positionné dans un évidement (10) situé sur le chemin de roulement de l'element roulant.

_Fig.1_

_Fig.6_

Fig. 2

Fig. 3

Fig. 4

Fig. 5